(19) Europäisches Patentamt

European Patent Office

Office européen des brevets

(11) EP 0 865 468 B1

(12) EUROPÄISCHE PATENTSCHRIFT

(45) Veröffentlichungstag und Bekanntmachung des Hinweises auf die Patenterteilung:
26.03.2003 Patentblatt 2003/13

(51) Int Cl.$^7$: **C09D 4/00**, C08F 290/06, C08F 299/02

(21) Anmeldenummer: 96942339.1

(22) Anmeldetag: 04.12.1996

(86) Internationale Anmeldenummer:
PCT/EP96/05408

(87) Internationale Veröffentlichungsnummer:
WO 97/020894 (12.06.1997 Gazette 1997/25)

(54) **STRAHLENHÄRTBARE ÜBERZUGSMASSE SOWIE DEREN VERWENDUNG ZUR BESCHICHTUNG**

RADIATION-HARDENABLE COATING COMPOUND AND ITS USE IN COATING

MATERIAU DE REVETEMENT DURCISSABLE PAR RAYONNEMENT ET SON UTILISATION POUR L'ENDUCTION

(84) Benannte Vertragsstaaten:
**AT BE CH DE ES FI FR GB IT LI NL PT SE**

(30) Priorität: **04.12.1995 DE 19545123**

(43) Veröffentlichungstag der Anmeldung:
**23.09.1998 Patentblatt 1998/39**

(73) Patentinhaber: **BASF Coatings Aktiengesellschaft**
**48165 Münster (DE)**

(72) Erfinder:
• **KRANIG, Wolfgang**
**D-48308 Senden (DE)**
• **PRIETO, Jorge**
**D-48165 Münster (DE)**
• **STEGEMANN, Nicole**
**D-48308 Senden (DE)**

(74) Vertreter: **Fitzner, Uwe, Dr. et al**
**Dres. Fitzner & Münch**
**Rechts- und Patentanwälte**
**Lintorfer Strasse 10**
**40878 Ratingen (DE)**

(56) Entgegenhaltungen:
**EP-A- 0 588 508**      **EP-A- 0 603 133**
**EP-A- 0 731 118**      **WO-A-93/21240**
**DE-A- 3 540 464**

**Beschreibung**

Die vorliegende Erfindung betrifft strahlenhärtbare Überzugsmassen und die Verwendung der strahlenhärtbaren Überzugsmassen zur Beschichtung von Holz, Holzwerkstoffen und Papier.

Es ist bekannt, Massen auf der Basis von Acrylsäureestern durch Strahlung, insbesondere UV-Strahlung, zu härten. Hier tritt jedoch das Problem auf, daß bei der Aushärtung von Oberflächen das Vorhandensein von Luft stört.

Aus der DE-PS 26 25 538 sind photopolymerisierbare Überzugsmassen bekannt, die als Reduktionsmittel bzw. Ketten übertragende Verbindungen Amine enthalten. Die Verwendung eines solches freien Amins hat den Nachteil, daß dieses als Weichmacher wirken kann und zu einem unerwünschten Belag auf der Oberfläche und zu Geruchsbelästigungen führt.

Durch Einbau der Aminogruppe in ein Molekül, das noch polymerisationsfähige Gruppen enthält, wird ein bei der Härtung einpolymerisiertes Amin erhalten, das die obengenannten Nachteile nicht aufweist. Eine bekannte Methode des Einbaues ist die Addition von Aminen an doppelbindungsreiche Moleküle, die analog einer Michael-Addition verläuft und die beispielsweise in F. Möller, Houben-Weyl, Bd. 11/1 (1957), S. 277-280, beschrieben ist. Die US-PS 2,759,913 lehrt die Anlagerung von Aminen an aktivierte, olefinisch ungesättigte Verbindungen, wie Acrylate, in äquimolaren Mengen, die zur vollständigen Umsetzung der aktivierten ethylenischen Doppelbindungen führt. Systematische Untersuchungen über die Anlagerung von Aminoalkoholen an Acrylate wurden von N. Ogata und T. Asahara, Bull. Chem. Soc. Jap. 39, Seiten 1486-1490, 1966, durchgeführt.

In der DE-PS 2 346 424 wird die Herstellung von strahlungshärtbaren Massen, ausgehend von Acrylestern mehrwertiger Alkohole und sekundären, aliphatischen monofunktionellen Aminen, beschrieben. Diese Massen weisen den Nachteil verminderter Lagerstabilität auf. Die Anlagerung eines sekundären Amins führt außerdem zu einer Verminderung der Acrylesterfunktionalität des Moleküls und somit auch zu einer Verminderung der Vernetzungsmöglichkeiten für die strahlungsinduzierte Polymerisation.

Aus der EP-A-280 222 sind Additionsprodukte aus Estern der Acryl- oder Methacrylsäure und mehrwertigen Alkoholen mit primären Monoaminen bekannt, wobei das Molverhältnis von Monoamin zu (meth)acrylischer Doppelbindung des Esters 0,05 : 1 bis 0,4 : 1 beträgt. Die Additionsprodukte gemäß der EP-A-280 222 werden in strahlungshärtbaren Massen eingesetzt, die an der Luft aushärten. Die Lagerstabilität der aus der EP-A-280 222 bekannten Produkte ist jedoch unzureichend. So ist bei Lagerung der Additionsprodukte ein deutlicher Viskositätsanstieg zu verzeichnen. Weiterhin treten Verträglichkeitsprobleme bei Additionsprodukten aus vierwertigen Polyolen mit den primären Monoaminen auf. Derartige Produkte sind trübe bzw. haben ein milchigweißes Aussehen. Nachteilig ist außerdem bei den in der europäischen Anmeldung beschriebenen aminmodifizierten Massen, daß ein relativ hoher Anteil an Monoamin notwendig ist, um in den erhaltenen Additionsprodukten für beispielsweise mit Benzophenon initiierte Systeme ausreichend hohe Stickstoffgehalte zu gewährleisten. Ausreichend hohe Stickstoffgehalte sind nötig, um bei üblicher Strahlendosis für eine in der Praxis ausreichende und vollständig verlaufende Photopolymerisation zu sorgen.

Die EP-A-2457 beschreibt Kunststoffe für geformte Kunststoffteile, wobei die Kunststoffe unter erhöhten Temperaturen aushärten. Bei den Kunststoffen handelt es sich um Michael-Additionsprodukte aus Acrylsäureestermonomeren und Aminen mit einer Amin-Wasserstoff-Funktionalität von mindestens 3. Die Komponenten werden in einem Äquivalentverhältnis von Acrylat zu Aminwasserstoff von 0,5 bis 2,0 umgesetzt.

Aus den US-Patentschriften Nr. 4,547,562 und 4,675,374 sind strahlenhärtbare lösungsmittelfreie Zusammensetzungen bekannt auf Basis von Polyacrylaten und Mono-, Di- oder Polyaminen. Als geeignete Di- und Polyamine werden Spezies mit mehr als einer primären Aminogruppe genannt. Bei Verwendung dieser Polyamine werden hochvernetzte, höhermolekulare und damit höherviskose Überzugsmassen erhalten, die ohne Zusatz von Reaktivverdünnern und Lösungsmitteln eine zu hohe Applikationsviskosität aufweisen oder sogar zu festen Produkten führen.

Die US-PS 4,045,416 und US-PS 3,845,056 schließlich betreffen strahlenhärtbare Überzugsmittel auf Basis von Aminacrylaten, welche erhalten werden durch Umsetzung von Polyacrylaten mit Aminen mit mindestens einem Amin-Wasserstoff. Als geeignete Amine werden primäre und sekundäre Monoamine sowie Polyamine genannt. Gemäß den US-Patenten werden als Polyaminkomponenten Polyamine mit mehr als einer primären Aminogruppe, Polyamine mit ausschließlich sekundären Aminogruppen oder Polyamine mit sekundären und tertiären Aminogruppen genannt. Bei Verwendung von Polyaminen mit mehr als einer primären Aminogruppe werden inhomogene Additionsprodukte mit geringer Lagerstabilität erhalten, die Verwendung von Polyaminen mit ausschließlich sekundären Aminogruppen wie beispielsweise Piperazin führt zu inhomogenen Gemischen auf Grund ungenügender Reaktivitäten oder von Unverträglichkeiten. Die Verwendung von Polyaminen mit sekundären und tertiären Aminogruppen führt nur zu einer Verminderung der Acrylsäure- bzw. Methacrylsäureesterfunktionalität des Moleküls.

Bisher auf Basis marktüblicher Bindemittel eingesetzte Formulierungen zeigen eine gute Haftung auf den üblichen Holzuntergründen (z.B. Nußbaum, Eiche, Kirschbaum) nur bei relativ geringen Anteilen von sogenannten Füllstoffen und Additiven wie Wachsen, Talkum, Silikaten oder auch Calciumcarbonat, Calciumsulfat und Bariumsulfat. Als ein für die Haftung besonders kritisch anzusehender Untergrund sind mit Melaminharz-(folie) beschichtete Preßhölzer, Kunststoffe wie PVC, Polypropylen.

Aus der EP-A-0 588 508 sind Zusammensetzungen zur Beschichtung von Polycarbonaten bekannt, welche neben einer guten Substrathaftung eine ausreichende Deformierbarkeit aufweisen. Diese Zusammensetzungen weisen jedoch den Nachteil auf, das sie neben Acrylaten noch aminofunktionelle Silane sowie kolloides Silica als Füllstoff enthalten müssen. Darüber hinaus sind diese Zusammensetzungen nicht zur Beschichtung von Substraten wie z.B. Holz geeignet.

Auf der anderen Seite ist besonders bei grundierenden Beschichtungen ein hoher Füllstoffanteil essentiell, um die in der Holzverarbeitung geforderte gute Schleifbarkeit zu gewährleisten. Marktübliche Formulierungen auf Basis von Polyetheracrylaten haben Füllstoffdehalte von nicht mehr als ca. 15 %. Ein höherer Füllstoffanteil führt in solchen Formulierungen z.B. zu Haftungsverlusten die nicht tolerierbar sind.

Aus der WO-A-9 321 240 sind ferner Zusammensetzungen bekannt, bei denen Polyétheracrylate, welche durch Addition von Oligomeren mit Polyaminen erhalten werden, zusammen mit Füllstoffen zur Beschichtung von z.B. Holz eingesetzt werden. Diese Zusammensetzungen enthalten jedoch nur übliche Füllstoffmengen und weisen keine besondere Schleifbarkeit auf.

Zusammensetzungen enthaltend Polyetheracrylate die durch Additionsreaktion von Oligomeren mit Polyaminen darstellbar sind und die darüber hinaus einen hohen Füllstoffgehalt aufweisen sind bereits aus der DE-A-3 540 464 bekannt. Diese Zusammensetzungen finden jedoch keine Anwendung auf dem Lacksektor, sondern werden zur Oberflächenbehandlung von Baustoffen verwendet.

Desweiteren neigen solche Formulierungen bei zu hohen Füllstoffgehalten zum Absetzen.

Eine Möglichkeit dem auszuweichen ist es, Bindemittel mit höherem Molekulargewicht zuzusetzen. Die damit einhergehenden Viskositätssteigerungen der Formulierungen müssen dann jedoch mit Beigaben von Monomeren (Reaktivverdünnern) aufgefangen werden. Aus produkt-ökologischen Gründen ist dies jedoch unerwünscht.

Die der vorliegenden Erfindung zugrundeliegende Aufgabe bestand daher darin, die zuvor beschriebenen Nachteile zu beseitigen, d.h. strahlenhärtbare Überzugsmassen zur Verfügung zu stellen, die eine ausreichende Lagerstabilität aufweisen und homogen sind auch unter Verwendung tetrafunktioneller (Meth)-acrylester als Vorstufe. Sie sollen ohne Verwendung externer Synergisten, z.B. Amine, strahlenhärtbar sein. Die erfindungsgemäßen Überzugsmassen sollen niedrigviskose Oligomere bei vergleichsweise guter Strahlenhärtbarkeit und vergleichsweise guten resultierenden Filmeigenschaften, insbesondere Härte, darstellen. Sie sollen eine niedrige Viskosität aufweisen, so daß auf die Verwendung von Reaktiwerdünnern und organischen Lösungsmitteln verzichtet werden kann. Schließlich soll eine gute Schleifbarkeit bei guter Haftung selbst auf kritischen Untergründen gewährleistet sein.

Die der vorliegenden Erfindung zugrundeliegende Aufgabe wird gelöst durch eine strahlenhärtbare Überzugsmasse enthaltend 50 bis 85, vorzugsweise 60 bis 75 Gew.-% Polyetheracrylat gemäß Anspruch 1, 15 bis 40, vorzugsweise 20 bis 30 Gew.-% Füllstoffe, 0 bis 10, vorzugsweise 0 bis 5 Gew.-% Wasser und in UV-Anwendungen 0 bis 6, vorzugsweise 3 bis 5 Gew.-% UV-Initiatoren.

Das erfindungsgemäß eingesetzte Polyetheracrylat ist ein Additionsprodukt aus Oligomeren mit mindestens zwei Acrylsäureester- und/oder Methacrylsäureestergruppen pro Molekül und Polyaminen.

Geeignete Acrylsäure- bzw. Methacrylsäureester werden aufgebaut z.B. mit zweiwertigen aliphatischen Alkoholen, wie Ethylenglykol, Propylenglykol-1,2 und -1,3, Butandiol-1,4, Pentandiol-1,2, Neopentylglykol, Hexandiol-1,6, 2-Methylpentandiol-1,5, 2-Ethylbutandiol-1,4, Dimethylolcyclohexan und Diethylenglykol, mit dreiwertigen Alkoholen, wie Glycerin, Trimethylolethan, Trimethylolpropan und Trimethylolbutan, mit vierwertigen Alkoholen, wie Pentaerythrit, sowie mit höherwertigen Alkoholen, wie Di-(trimethylolpropan), Di-(pentaerythrit) und Sorbitol.

Weiterhin sind cycloaliphatische Alkohole, wie Cyclohexanole und 1,4-Bis-(hydroxymethyl)-cyclohexan, araliphatische Alkohole, wie 1,3-Xylylendiol sowie Phenole wie 2,2-Bis-(4-hydroxyphenyl)-propan (Bisphenol A) geeignet.

Bevorzugt werden als Oligomere Ester aus Acrylsäure und/oder Methacrylsäure und drei- bis vierwertigen Alkoholen verwendet.

Die oben aufgeführten mehrwertigen Alkohole werden vorzugsweise vor der Veresterung mit Acrylsäure oder Methacrylsäure durch Alkoxylierung mit z.B. Ethylenoxid oder Propylenoxid in höhermolekulare Etheralkohole überführt worden sein. Daraus resultieren Polyetheracrylate oder Polyethermethacrylate. Derartige Polyether(meth)acrylate werden besonders bevorzugt in den erfindungsgemäßen Additionsprodukten verwendet.

Die hydroxylgruppenhaltigen Polyether, die mit Acrylsäure und/oder Methacrylsäure verestert werden, werden durch Umsetzung von zwei- und/oder mehrwertigen Alkoholen mit verschiedenen Mengen an Ethylenoxid und/oder Propylenoxid nach gut bekannten Methoden (vgl. z.B. Houben-Weyl, Band XIV, 2, Makromolekulare Stoffe II, (1963)) erhalten.

Erfindungsgemäß besonders bevorzugt werden Polyetheracrylate, die aus Acrylsäure und einem propoxyliertem Trimethylolpropan-Polyol sowie anschließendem Umsetzen mit 4-Dimethylaminopropylamin hergestellt sind.

Einsetzbar sind auch Polymerisationsprodukte des Tetrahydrofurans oder Butylenoxids.

Als Oligomere kommen auch Polyesteracrylate und/-oder Polyestermethacrylate in Frage. Zur Herstellung der Polyester(meth)acrylate werden als mehrwertige Alkohole hydroxylgruppenhaltige Polyester (Polyesterpolyole) eingesetzt. Diese können durch Veresterung von Dicarbonsäuren mit Diolen und Triolen nach gut bekannten Methoden (vgl. z.B. P.J. Flory, J. Am. Chem. Soc. 58, 1877 (1936) und J. Am. Chem. Soc. 63, 3083 (1953)) hergestellt werden.

Die Herstellung von Polyetheracrylaten und Polyesteracrylaten ist beispielsweise beschrieben in der DE-A-38 36 370.

Die Polyamine sind Diamine mit einer primären und einer tertiären Aminogruppe und das Verhältnis von primären Aminogruppen zu (meth)acrylischen Doppelbindungen ist 0,01:1 bis 0,2:1, bevorzugt 0,03:1 bis 0,1:1.

Als Diamine mit einer primären und einer tertiären Aminogruppe eignen sich N,N-Dialkyl-di-aminoalkane, wie z.B. N,N-Dimethyl-1,3-diaminopropan, welches durch katalytische Hydrierung von Dimethylaminopropionitril erhältlich ist. Die Herstellung dieses Polyamins ist beispielsweise beschrieben in Houben Weyl, Bd 11/1, 1957, S. 565, in der EP-A-316 761 oder in P. Lappe, H. Springer und J. Weber, Chem.-Ztg. 111 (4), S. 117-125 (1987).

Weitere geeignete Dialkylaminopropane sind N,N-Diethyl-1,3-diaminopropan, N,N-Di-n-propyl-1,3-diaminopropan,4-Morpholinopropylamin,3-(N-Piperidin)propylamin, N,N-Diphenyl-1,3-diaminopropan.

Als Polyaminkomponente der erfindungsgemäßen Additionsprodukte kommen weiterhin in Frage: N,N-Dialkyl-1,2-di-aminoethane, wie Dimethylaminoethylamin, Diethylaminoethylamin, N-β-Aminoethylmorpholin (Herstellung siehe z.B. Houben Weyl, Bd. 11/1, 1957, S. 563), N,N-Dialkyl-1,5-diaminopentane, die herstellbar sind durch 1,4-Addition von sekundären Aminen an 1-Cyanbutadien-1,3 unter Bildung der Nitrile und anschließender katalytischer Hydrierung (Herstellung siehe Houben-Weyl, Bd. 11/1, 1957, S. 276). Beispiele für geeignete N,N-Dialkyl-1,5-diaminopentane sind Dimethylaminopentylamin, Diethylaminopentylamin, 4-Morpholinpentylamin.

Besonders gute Ergebnisse werden erzielt, wenn als Aminkomponente N,N-Dimethyl-1,3-diaminopropan verwendet wird.

Die erfindungsgemäßen Additionsprodukte sind bei Raumtemperatur flüssig. Sie werden hergestellt, indem an einen Acrylsäureester oder Methacrylsäureester oder an ein Gemisch dieser Ester in einer Michael-Reaktion die Diamine addiert werden. Die erhaltenen aminmodifizierten Oligomere enthalten noch nichtumgesetzte Acrylester- und/oder Methacrylsäureestergruppen sowie tertiäre Aminogruppen.

Die Additions-Reaktion wird in flüssiger Phase bei mäßiger Temperatur in Abwesenheit eines Katalysators durchgeführt. Das Diamin wird in entsprechender Menge dem Ester unter Rühren bei Raumtemperatur zugesetzt. Die Temperatur kann dabei auf etwa 40°C ansteigen. Durch Erhöhung der Temperatur kann die Reaktion beschleunigt werden, bei 60°C ist sie nach ca. 12 Stunden abgeklungen. Die Viskosität der erhaltenen Mischung ist dann zeitlich konstant.

Wegen der Reproduzierbarkeit sollte die Reaktion möglichst vollständig ablaufen, was bei Reaktionstemperaturen über 40°C erreicht wird.

Die Umsetzung wird im allgemeinen ohne Lösungsmittel durchgeführt, aber es können auch Lösungsmittel angewandt werden, insbesondere um feste Amine als Lösung zuzudosieren. Das Lösungsmittel wird dann nach erfolgter Michael-Addition entfernt.

Damit bei der Additionsreaktion keine unerwünschte Polymerisation stattfindet, werden dem Reaktionsgemisch im allgemeinen Polymerisationsinhibitoren zugesetzt. Zu den geeigneten Polymerisationsinhibitoren gehören bekannte Produkte, wie substituierte Phenole, wie 2,6-Di-tert.-butyl-p-kresol, Hydrochinone, wie Methylhydrochinone, und Thioether, wie Thiodiglykol oder Phenothiazin.

Die beschriebenen aminmodifizierten Additionsprodukte werden als filmbildende Komponenten in erfindungsgemäßen strahlenhärtbaren Überzugsmassen verwendet. Diese strahlenhärtbaren Überzugsmittel können neben den erfindungsgemäßen aminomodifizierten Oligomeren je nach Viskosität der Ester weitere, für den Einsatz in strahlenhärtbaren Überzugsmitteln bekannte copolymerisierbare Verbindungen enthalten z.B. (Meth)-Acrylsäureester, insbesondere Methyl(meth)acrylat, Ethyl(meth)acrylat, Propyl(meth)acrylat, Butyl(meth)acrylat, Isopropyl(meth)acrylat, Isobutyl(meth)acrylat, Pentyl(meth)acrylat, Isoamyl(meth)acrylat, Hexyl(meth)-acrylat, Cyclohexyl(meth)acrylat, 2-Ethylhexyl(meth)-acrylat, Octyl(meth)acrylat, 3,5,5-Trimethylhexyl(meth)acrylat, Decyl(meth)acrylat, Dodecyl(meth)acry-lat, Hexadecyl(meth)acrylat, Octadecyl(meth)acrylat, Octadecenyl(meth)acrylat sowie die entsprechenden Ester der Malein-, Fumar-, Tetrahydrophthal-, Croton-, Isocroton-, Vinylessig- und Itaconsäure. Bevorzugt eingesetzt werden Monomere mit mehr als 1 Doppelbindung pro Molekül, z.B. Ethylenglykoldiacrylat, Diethylenglykoldiacrylat, Propylenglykoldiacrylat, Trimethylenglykoldiacrylat, Neopentylglykoldiacrylat, 1,3-Butylenglykoldiacrylat, 1,4-Butylenglykoldiacrylat, 1,6-Hexamethylenglykoldiacrylat,1,10-Decamethylenglykol-diacrylat, Trimethylolpropantriacrylat, Pentaerythrittetraacrylat und Pentaerythrittriacrylat sowie die entsprechenden Methacrylate. Ganz besonders bevorzugt eingesetzt werden Trimethylolpropantriacrylat und Acrylsäureester von propoxiliertem Trimethylolpropan.

Der Zusatz dieser monomeren, copolymerisierbaren Verbindungen (oft auch Reaktivverdünner genannt) ist aber im allgemeinen nicht erforderlich, da die erfindungsgemäßen aminmodifizierten Ester niedrigviskos sind.

Der Vorteil der beschriebenen Additionsprodukte ist auch insbesondere darin zu sehen, daß durch die in ihnen enthaltenen tertiären Aminogruppen diese in Wasser dispergierbar sind, d.h. auf die Verwendung von organischen Lösungsmitteln kann vollständig verzichtet werden.Die tertiären Aminogruppen können durch zumindest teilweise Umsetzung mit Säuren in die geladenen Gruppen überführt werden. Zur Neutralisation der basischen Gruppen geeignete Säuren sind beispielsweise Milchsäure, Essigsäure, Ameisensäure Phosphorsäure und Salzsäure.

Die strahlenhärtbaren Überzugsmassen enthalten für UV-Anwendungen außerdem üblicherweise in strahlenhärtbaren Überzugsmitteln eingesetzte Photoinitiatoren, beispielsweise Benzophenone, Benzoine oder Benzoinether. Auf die Verwendung von Synergisten kann verzichtet werden, da die in den Überzugsmitteln enthaltenen Ester aminmodifiziert sind und damit eine synergistische Wirkung aufweisen.

Die erfindungsgemäßen Lacke können auch mit Elektronenstrahlen gehärtet werden. In den entsprechenden Formulierungen kann auf den Zusatz von UV-Initiatoren verzichtet werden.

Die erfindungsgemäßen strahlenhärtbaren Zusammensetzungen können neben den aminmodifizierten Umsetzungsprodukten aus den Estern und den Diaminen noch weitere photopolymerisierbare Bindemittel, welche ebenfalls aminmodifiziert sein können, enthalten. Als derartige weitere aminmodifizierte Bindemittel kommen z.B. die aus der EP-A-280 222 und die aus den US-Patentschriften Nr. 4,045,416, 4,547,562 und 4,675,374 bekannten strahlenhärtbaren Bindemittel in Frage.

Als nicht-aminmodifizierte weitere Bindemittel kommen die als Beispiel für die Oligomerkomponente zuvor beschriebenen Polyetheracrylate, Polyethermethacrylate, Polyesteracrylate, Polyestermethacrylate, Urethanacrylate, Urethanmethacrylate, Epoxidacrylate und Epoxidmethacrylate in Frage.

Die erfindungsgemäßen strahlenhärtbaren Überzugsmassen enthalten übliche Hilfs- und Zusatzstoffe, z.B. Extender, Entschäumer, Verlaufsmittel und filmbildende Hilfsmittel, Gleitmittel, Haftvermittler.

Als Füllstoffe kommen erfindungsgemäß Silikate, Carbonate und Sulfate in Betracht. Zu ersteren zählen insbesondere Kaoline, Talkum, Kieselkreide, Glimmer, z.B. Eisenglimmer, Siliziumcarbeet und Quarzmehl.

Als carbonatische Füllstoffe kommen Kalziumcarbonate und Kalzium-Magnesium-Carbonate (Dolomit) in Betracht.

Als sulfatische Füllstoffe werden Bariumsulfate (Schwerspat) und Kaliumsulfate (Leichtspate) eingesetzt.

Neben den genannten Stoffen können auch Holzmehl und CelluloseDerivate verwendet werden.

Erfindungsgemäß kommen auch farbgebende Stoffe in Betracht. Hierzu zählen sowohl anorganische, z.B. Ruß, $TiO_2$ als auch organische Pigmente.

In den erfindungsgemäßen Formulierungen sind Füllkörpergehalte von 20 bis über 30 Gew.-% verwirklicht worden. Nach dem Stand der Technik waren derart hohe Füllstoffgehalte für nicht möglich gehalten worden.

Es ist erfindungsgemäß überraschend, daß in einem Bereich von mehr als 15 Gew.-% Füllstoffanteil es zu keinen Haftungsverlusten kommt. Darüber hinaus weisen die erfindungsgemäßen Überzugsmassen keinerlei irreversible Absetzneigung auf. Weitere überraschend vorteilhafte Eigenschaften sind die gute Schleifbarkeit und sehr gute Haftung selbst auf kritischen Untergründen, wie z.B. mit Melaminharzen beschichteten Holzwerkstoffen oder Kunststoffen.

In einer erfindungsgemäßen Variante kann die Viskosität und Reaktivität durch einfache Aminzugabe vor der Applikation in gewissen Grenzen eingestellt werden. Vergehen zwischen der Aminzugabe und der Applikation der Überzugsmasse ca. 48 Std., ist das Amin nicht mehr in freier Form vorhanden, sondern an die übrigen Bestandteile der Überzugsmasse chemisch oder physikalisch gebunden. Dabei steigt die Reaktivität des unter Aminzugabe entstandenen Gemisches gegenüber der oben beschriebenen Basisformulierung. Versuche haben ergeben, daß je nach Menge unter UV-Strahlung eine annähernd verdoppelte Reaktionsgeschwindigkeit zu verzeichnen ist. Die Viskosität läßt sich ebenso nahezu verdoppeln.

In einer bevorzugten Ausführungsform der Erfindung besteht demgemäß die Überzugsmasse aus 95 bis 100 Gew.-%, vorzugsweise 98 bis 100 Gew.-% des oben beschriebenen Überzugsmittels und 0 bis 5,vorzugsweise 0 bis 2 Gew.-% vor der Applikation zugesetzten Polyamin.

Als Polyamine kommen die bereits oben beschriebenen Verbindungen in Betracht. D.h. in erster Linie sind hier Diamine mit einer primären und tertiären Aminogruppe zu erwähnen. Besonders bevorzugt ist hierbei der Zusatz von Dimethylaminopropylamin.

Die Gleitmittel können mit einem Anteil von 0,8 bis 1,2 Gew.-% und die Verlaufsmittel mit einem Anteil von 0,2 bis 0,8 Gew.-% in der Überzugsmasse vorhanden sein. In diesem Fall wird die übrige Füllstoffmenge entsprechend reduziert.

Es ist überraschend, daß die erwähnte gute Haftung auf den verschiedenen Substraten erzielt wird ohne den Einsatz typischer Haftvermittler. Im Einzelfall können jedoch zusätzliche Haftvermittler eingesetzt werden. Beispiele sind Alkoxysilane, wie beispielsweise N-β-Aminoethyl-, -Aminopropyltrimethoxysilan, - N-Methyl-β-aminopropyltrimethoxysilan oder triaminomodifiziertes Propyltrimethoxysilan (z.B. Haftvermittler DYNASLYAN[R], .Typ TRIAMO[α], Handelsprodukt der Dynamit Nobel Chemie).

Die Härtung der Lackfilme wird mittels Strahlung, bevorzugt mittels UVoder Elektronen-Strahlung durchgeführt. Demgemäß enthalten die erfindungsgemäßen mit UV-gehärteten Überzugsmassen UV-Initiatoren. Hierbei handelt es sich vorzugsweise um Benzophenon, Benzainalkylether, Benzilketate, Hydroxalkylphenone, Thioxanthone sowie Phosphinoxid- und Bisacylphosphinoxid-Derivate.

Die Härtung der Lackfilme erfolgt direkt nach dem Auftragen oder nach dem Verdunsten von anwesendem Wasser mittels UV- oder Elektronenstrahlen. Die Anlagen und Bedingungen für diese Härtungsmethoden sind aus der Literatur bekannt (vgl. z.B. R. Holmes, U.V. and E.B. Curing Formulations for Printing Inks, Coatings and Paints, SITA-Technology, Academic Press, London, United Kingdom 1984, S. 79 bis 111) und bedürfen keiner weiteren Beschreibung.

Die Überzugsmittel können durch Spritzen, Walzen, Fluten, Tauchen, Rakeln, Streichen, Gießen oder durch Vakumat-Applikation auf das Substrat, vorzugsweise auf Holz, auf Holzwerkstoffe oder auf Papier, aufgebracht werden.

Die erfindungsgemäßen strahlenhärtbaren Überzugsmittel weisen eine ausgezeichnete Lagerstabilität auf, haben ein transparentes Aussehen, eine gute Strahlenhärtbarkeit, und führen nach der Strahlenhärtung zu Filmen mit ausgezeichneten Eigenschaften, Die erhaltenen Filme zeichnen sich durch eine ausgezeichnete Transparenz aus.

Nachfolgend wird die Erfindung anhand von Ausführungsbeispielen näher erläutert. Teile bedeuten Gewichtsteile, sofern nichts anderes angegeben wird:

Beispiel 1

Basisformulierung:

    1. Polyetheracrylat        68,5 %
    hergestellt aus propoxyliertem
    Trimethylolpropan-Polyol
    (Desmophen550U der Fa. Bayer),
    Acrylsäure und
    anschließendes Umsetzen mit 4%
    Dimethylaminopropylamin
    2. Schichtsilikat        2,0 %
    3. Talkum        10,0%
    4. Calciumcarbonat        10,0 %
    5. Gleitmittel (Lanco Wachs)        1,0 %
    6. Verlaufsmittel (Byk 306)        0,5 %
    7. Wasser        4,0 %
    8. Benzophenon        4,0 %
    Summe:        100 %

Viskosität 42-45 sec Auslaufviskosität nach DIN6/20°C.

Beispiel 2

Viskositätseinstellung, Reaktivitätseinstellung

    1. Basisrezeptur s.o.        99,5 %

    2. Dimethylaminopropylamin        0,5 %
    Summe:        100 %

1. und 2. werden miteinander gemischt und danach 48 Std. belassen.

Ergebnis: Die Reaktivität der Mischung ist gegenüber der Basisformulierung von 9 m/min. pro 80W Quecksilber UV-Strahler auf 15 m/min. gestiegen. Die Viskosität ist von 44 auf 72 sec. (Auslauf nach DIN6/20°C) gestiegen.

Beispiel 3

    1. 70,30 Teile Bindemittel wie Bsp.1
    2. 4,10 Teile Benzophenon
    3. 8,30 Teile Talkum
    4. 10,30 Teile Kreide (CaCO$_3$)
    (5. 3,00 Teile Schichtsilikat zur Mattierung)
    (6. 3,50 Teile Schichtsilikat)
    5. 6,50 Teile Schichtsilikat
    6. 0,50 Teile Verlaufsmittel
    100,00

Formulierung erfüllt neben den genannten Vorteilen auch Chemikalientest gemäß DIN68861 B.

Vergleichsbeispiele mit marktüblichen Bindemitteln

Zu Beispiel 1

    1) Pos.1: 68,50 Teile des Polyacrylesters Laromer PO84F (zu beziehen über BASF AG)

| Schichtsilikat | 2,0 % |
|---|---|
| Talkum | 10,0 % |
| Calciumcarbonat | 10,0 % |
| Gleitmittel (Lanco Wachs) | 1,0 % |
| Verlaufsmittel (Byk 306) | 0,5 % |
| Wasser | 4,0 % |
| Benzophenon | 4,0 % |

Ergebnis: Viskosität zu hoch DIN6 > 120 sec., dadurch praktisch nicht verarbeitbar.
2) Pos.2: 68,50 Teile des Polyacrylesters Laromer PO83F
Ergebnis: Viskosität akzeptabel, Lack jedoch nicht lagerstabil, starke irreversible Absetzungsneigung.

## Patentansprüche

1. Strahlenhärtbare Überzugsmasse bestehend aus 50-85, vorzugsweise 60 bis 75 Gew.-% Polyetheracrylat, welches aus Oligomeren, die Ester aus Acrylsäure und/oder Methacrylsäure und drei - und/oder vierwertigen Alkoholen sind und Polyaminen, wobei die Polyamine Diamine mit einer primären und einer tertiären Aminogruppe sind und das Verhältnis von primären Aminogruppen der Polyamine zu (meth)acrylischen Doppelbindungen der Oligomeren 0,01:1 bis 0,2:1, bevorzugt 0,03:1 bis 0,1:1, beträgt, herstellbar ist, 15 bis 40, vorzugsweise 20 bis 30 Gew.-% Füllstoff, 0 bis 10, vorzugsweise 0 bis 5 Gew.-% Wasser und in UV-Formulierungen 0 bis 6, vorzugsweise 3 bis 5 Gew.-% UV-Initiator und ggf. weiteren photopolymerisierbaren Bindemitteln sowie weiteren üblichen Hilfs- und Zusatzstoffen.

2. Strahlenhärtbare Überzugsmasse nach Anspruch 1,
**dadurch gekennzeichnet, daß** das Polyetheracrylat ein Additionsprodukt aus Oligomeren mit mindestens zwei Acrylsäureester- und/oder Methacrylsäureestergruppen pro Molekül und Diaminen mit einer primären und einer tertiären Aminogruppe ist.

3. Strahlenhärtbare Überzugsmasse nach Anspruch 2,
**dadurch gekennzeichnet, daß** das Polyamin N, N-Dimethyl-1,3-diaminopropan ist.

4. Strahlenhärtbare Überzugsmasse nach Anspruch 2,
**dadurch gekennzeichnet, daß** 95 bis 100 %, vorzugsweise 98 bis 100 % Überzugsmittel gemäß einem der Ansprüche 1 bis 3 und 0 bis 5 %, vorzugsweise 0 bis 2 % Polyamin eingesetzt werden.

5. Strahlenhärtbare Überzugsmasse nach Anspruch 4,
**dadurch gekennzeichnet, daß** die Polyamine Diamine mit einer primären und einer tertiären Aminogruppe sind.

6. Strahfenhärtbare Überzugsmasse nach Anspruch 5,
**dadurch gekennzeichnet, daß** das Polyamin Dimethylaminopropylamin ist.

7. Verwendung von strahlenhärtbaren Überzugsmassen, enthaltend 50 bis 85 Gew.-% Polyetheracrylat gemäß Auspruch 1, 15 bis 40 Gew.-% Füllstoff, 0 bis 10 Gew.-% Wasser und in UV-Formulierungen 0 bis 6 Gew.-% UV-Initiator, zur Lackierung von Holz, Holzwerkstoffen und Papier.

## Claims

1. Radiation-curable coating composition comprising from 50 to 85, preferably from 60 to 75% by weight of polyether acrylate, which can be prepared from oligomers which are esters of acrylic acid and/or methacrylic acid and alcohols with a functionality of 3 and/or 4 and polyamines, the polyamines being diamines having a primary and a tertiary amino group and the ratio of primary amino groups of the polyamines to (meth)acrylic double bonds of the oligomers being from 0.01:1 to 0.2:1, preferably from 0.03:1 to 0.1:1, from 15 to 40, preferably from 20 to 30% by weight of filler, from 0 to 10, preferably from 0 to 5% by weight of water and, in UV formulations, from 0 to 6, preferably from 3 to 5% by weight of UV initiator and, where appropriate, further photopolymerizable binders and also further customary auxiliaries and additives.

2. Radiation-curable coating composition according to Claim 1, **characterized in that** polyether acrylate is an adduct of oligomers containing at least two acrylic ester and/or methacrylic ester groups per molecule and diamines containing one primary and one tertiary amino group.

3. Radiation-curable coating composition according to Claim 2, **characterized in that** the polyamine is N, N-dimethyl-1,3-diaminopropane.

4. Radiation-curable coating composition according to Claim 2, **characterized in that** from 95 to 100%, preferably from 98 to 100% of coating material according to one of Claims 1 to 3 and from 0 to 5%, preferably from 0 to 2% of polyamine are employed.

5. Radiation-curable coating composition according to Claim 4, **characterized in that** the polyamines are diamines having a primary and a tertiary amino group.

6. Radiation-curable coating composition according to Claim 5, **characterized in that** the polyamine is dimethylaminopropylamine.

7. Use of radiation-curable coating compositions comprising from 50 to 85% of polyether acrylate according to Claim 1, from 15 to 40% by weight of filler, from 0 to 10% by weight of water and, in UV formulations, from 0 to 6% by weight of UV initiator for coating wood, woodbase materials and paper.

**Revendications**

1. Matière de revêtement durcissable par irradiation, constitué de 50-85, de préférence de 60 à 75 % en poids de polyétheracrylate, qui peut être préparée à partir d'oligomères qui sont des esters d'acide acrylique et/ou d'acide méthacrylique et d'alcools tri- et/ou tétrahydroxylés et de polyamines, les polyamines étant des diamines comportant un groupe amino primaire et un groupe amino tertiaire, et le rapport des groupes amino primaires des polyamines aux doubles liaisons (méth)acryliques des oligomères allant de 0,01:1 à 0,2:1, de préférence de 0,03:1 à 0,1:1, de 15 à 40, de préférence de 20 à 30 % en poids de charge, de 0 à 10, de préférence de 0 à 5 % en poids d'eau et, dans des compositions UV, de 0 à 6, de préférence de 3 à 5 % en poids d'amorceur UV et éventuellement d'autres liants photopolymérisables ainsi que d'autres adjuvants et d'additifs usuels

2. Matière de revêtement durcissable par irradiation selon la revendication 1, **caractérisée en ce que** le polyétheracrylate est un produit d'addition d'oligomères comportant au moins deux groupes ester d'acide acrylique et/ou ester d'acide méthacrylique par molécule et de diamines comportant un groupe amino primaire et un groupe amino tertiaire.

3. Matière de revêtement durcissable par irradiation selon la revendication 2, **caractérisée en ce que** le polymère est le N,N-diméthyl-1,3-diaminopropane.

4. Matière de revêtement durcissable par irradiation selon la revendication 2, **caractérisée en ce qu'**on utilise de 95 à 100 %, de préférence de 98 à 100 % de produit de revêtement selon l'une quelconque des revendications 1 à 3 et de 0 à 5 %, de préférence de 0 à 2 % de polyamine.

5. Matière de revêtement durcissable par irradiation selon la revendication 4, **caractérisée en ce que** les polyamines sont des diamines comportant un groupe amino primaire et un groupe amino tertiaire.

6. Matière de revêtement durcissable par irradiation selon la revendication 5, **caractérisée en ce que** la polyamine est la diméthylaminopropylamine.

7. Utilisation de matières de revêtement durcissables par irradiation, contenant de 50 à 85 % en poids de polyétheracrylate selon la revendication 1, de 15 à 40 % en poids de charge, de 0 à 10 % en poids d'eau et, dans des formules UV, de 0 à 6 % en poids d'amorceur UV, pour le peinturage de bois, de matériaux à base de bois et du papier.